# EUROPÄISCHE PATENTANMELDUNG

(11) **EP 1 533 673 A2**
(43) Veröffentlichungstag der Anmeldung: **25.05.2005**
(21) Anmeldenummer: 04027196.7
(22) Anmeldetag: 16.11.2004
(51) Int. Cl.: G05B 19/418

(54) **Steuerungssystem**

(30) Priorität: 18.11.2003 DE 10353950
(71) Anmelder: Phoenix Contact GmbH & Co. KG, 32825 Blomberg (DE)
(72) Erfinder: Esch, Reiner, 32825 Blomberg (DE); Horn, Steffen, 32825 Blomberg (DE); Kalhoff, Johannes, 32825 Blomberg (DE)
(74) Vertreter: Herden, Andreas, Dipl.-Ing.

(57) **Zusammenfassung**

Die Erfindung betrifft ein Steuerungssystem zum Steuern von sicherheitskritischen Prozessen mit einer Kommunikation über einem Feldbus.

Der Erfindung liegt die Aufgabe zugrunde, ein derartiges Steuerungssystem effizienter und sicherer zu machen, sowie im Fehlerfall verbesserte Diagnose- und Reaktionsmöglichkeiten zu eröffnen.

Erfindungsgemäß ist die sichere Steuereinheit in die Anschaltbaugruppe integriert und somit nicht direkt an den Feldbus, sondern an die Multiport-Memory-Schnittstelle des Busmasters angeschlossen, wobei der Busmaster die fehlersicheren Daten ohne sicherheitsprotokollrelevante Interpretation in den Feldbusrahmen einfügt, um die Daten an die Signaleinheit zu übermitteln.

## Beschreibung

### Gebiet der Erfindung

Die Erfindung betrifft ein Steuerungssystem zum Steuern von sicherheitskritischen Prozessen im Allgemeinen und ein Steuerungssystem, mit einer Kommunikation über einem Feldbus im Speziellen.

### Hintergrund der Erfindung

Seit mehreren Jahren werden auf dem Gebiet der Automatisierung immer häufiger Feldbussysteme eingesetzt, an die Eingabe-/Ausgabe-Geräte sowie eine übergeordnete Steuereinrichtung angeschaltet sind. Ein Beispiel hierfür ist der Interbus gemäß der Norm EN 50254.

Derartige Feldbussysteme umfassen typischerweise eine Vielzahl von Signaleinheiten oder Busteilnehmer, welche mit den zu steuernden Prozessen verbunden sind und einen Busmaster, welcher eine rahmenbasierte Kommunikation mittels sogenannten Feldbustelegrammen über den Feldbus steuert.

Mit solchen Feldbussystemen kann der Verkabelungsaufwand deutlich verringert werden, da Kupferleitungen eingespart werden können. Allerdings ist es problematisch, serielle Feldbussysteme derart auszulegen, dass sie sicherheitsrelevanten Anforderungen gerecht werden. Derartige sicherheitsrelevante Funktionen können z.B. eine Stopp-Funktion oder eine Not-Aus-Funktion, durch die das Feldbussystem in einen sicheren Zustand gefahren werden kann, sein.

Bei früheren Feldbussystemen erfolgt die Übertragung der dazu erforderlichen Steuersignale zwischen Steuerungen und Busteilnehmern jeweils über gesonderte Leitungen, d.h. nicht über den Feldbus selbst.

Andere bekannte Ansätze bestehen darin, all diejenigen Einrichtungen, die Sicherheitsfunktionen ausführen sollen, entsprechend redundant auszulegen. Hierzu sei zum Beispiel die DE 40 32 033 A1 erwähnt, aus der ein zumindest teilweise redundant aufgebautes elektrisches Automatisierungssystem für eine technische Anlage bekannt ist. Bei diesem System werden sicherheitsrelevante Signale doppelt ausgelöst und auf mindestens zwei voneinander unabhängigen Signalwegen zu zumindest teilweise redundanten Teilnehmern übertragen, die die sicherheitsrelevanten Signale auswerten.

Die DE 37 06 325 C2 beschreibt ein Steuer- und Datennetzwerk, bei welchem sicherheitsbezogene Einrichtungen an eine separate Nothalt-Steuerleitung angeschlossen sind, um miteinander kommunizieren zu können.

Diesen bekannten Techniken haftet der Nachteil an, dass entweder ein hohes Maß an redundanten Bauteilen erforderlich ist, oder zur Übertragung der zusätzlichen Steuersignale parallele Einzelleitungen benötigt werden.

Aus dem Patent DE 197 42 716 C2 ist nun eine Steuer- und Datenübertragungsanlage bekannt, bei welcher sicherheitsbezogene Einrichtungen über den Feldbus miteinander kommunizieren können, und jeder Ausgang über einen Schalter mit einer Bus-Anschalteinrichtung und unmittelbar mit der sicherheitsbezogenen Einrichtung des jeweiligen Busteilnehmers und/oder einer Master-Steuereinrichtung verbunden ist.

Diese Anlage weist zwar bereits den Vorteil auf, dass eine sichere Steuerung über den Feldbus bewerkstelligt wird, soll aber mit der nachfolgend beschriebenen Erfindung weiter verbessert werden.

Ein weiteres Steuerungssystem zum Steuern von sicherheitskritischen Prozessen wird in dem Patent DE 199 28 517 C2 vorgeschlagen, bei welchem eine sichere Steuereinheit an den Feldbus angeschlossen ist. Dieses System weist jedoch in verschiedener Hinsicht Nachteile auf.

Zunächst müssen Telegrammdaten die an eine Signaleinheit adressiert sind, erzeugt und anschließend von der sicheren Steuereinheit durch fehlersichere Telegrammdaten wieder ersetzt werden. Diese Vorgehensweise erscheint ineffizient.

Ferner können Daten zwischen dem Busmaster und der sicheren Steuereinheit nur über den aktiven Feldbus übertragen werden, damit die Steuereinheit eine Verarbeitung vornehmen kann. Dies wird als nachteilig erachtet, da diese Kommunikation nur bei aktivem Feldbus möglich ist.

Darüber hinaus ist die Übertragung über den Feldbus relativ langsam und Diagnosemöglichkeiten sind in nachteiliger Weise, wenn überhaupt, höchstens eingeschränkt vorhanden.

### Allgemeine Beschreibung der Erfindung

Der Erfindung liegt daher die Aufgabe zugrunde, ein Steuerungssystem für sicherheitskritische Prozesse derart zu verbessern, dass eine effiziente Kommunikation zwischen den sicheren Steuereinheiten und dem Busmaster erzielt wird.

Eine weitere Aufgabe der Erfindung ist es, ein derartiges Steuerungssystem bereit zu stellen, welches verbesserte Diagnose- und Reaktionsmöglichkeiten, insbesondere im Fehlerfall eröffnet.

Noch eine Aufgabe der Erfindung ist es, ein derartiges Steuerungssystem bereit zu stellen, welches eine hohe Sicherheit gewährleistet.

Noch eine weitere Aufgabe der Erfindung ist es, ein derartiges Steuerungssystem bereit zu stellen, welches die vorstehend genannten Nachteile vermeidet, wobei die Flexibilität des Systems gesteigert werden kann, indem auf einfache und kostengünstige Art und Weise sicherheitsbezogene Einrichtungen in das System integriert werden können.

Die Aufgabe der Erfindung wird in überraschend einfacher Weise bereits durch den Gegenstand der unabhängigen Ansprüche gelöst. Vorteilhafte Weiterbildungen der Erfindung sind in den Unteransprüchen definiert.

Erfindungsgemäß ist das Steuerungs- und Datenübertragungssystem zum Steuern von sicherheitskritischen Prozessen hergerichtet und umfasst einen Feldbus, insbesondere einen seriellen Feldbus und einen an den Feldbus angeschlossenen Busmaster zum Steuern der Kommunikation über den Feldbus.

Weiter umfasst das System zumindest eine sichere Signaleinheit oder einen sicheren Busteilnehmer welche bzw. welcher im Betrieb über E/A-Kanäle mit zumindest einem der sicherheitskritischen Prozesse verknüpft oder verbunden ist.

Vorzugsweise umfasst das System eine Mehrzahl von Signaleinheiten, insbesondere sichere und nicht sichere Signaleinheiten, wobei die sicheren Signaleinheiten mit den sicherheitskritischen Prozessen und die nicht sicheren Signaleinheiten mit nicht sicheren Prozessen verknüpft sind.

Ferner sind der Busmaster und die Signaleinheiten über den Feldbus, insbesondere seriell miteinander verbunden und es findet über den Feldbus eine umlaufende Kommunikation oder ein Telegrammverkehr zwischen dem Busmaster und den Signaleinheiten statt.

Weiter ist eine sichere erste Steuereinheit, insbesondere mit einer integrierten sicheren Steuerung umfasst, mittels welcher die sicherheitskritischen Prozesse gesteuert werden. Die sicheren Signaleinheiten und die sichere Steuereinheit weisen hierfür jeweils sicherheitsbezogene Einrichtungen auf.

Hierdurch wird eine fehlersichere Kommunikation bereitgestellt, um die sicherheitskritischen Prozesse zu steuern. Es ist dem Fachmann ersichtlich, dass eine absolute Fehlersicherheit nicht erreichbar ist, daher wird unter fehlersicherer Kommunikation eine Kommunikation verstanden, welche gegenüber einer nicht sicheren Kommunikation eine erhöhte Fehlersicherheit gewährleistet.

Erfindungsgemäß ist die sichere Steuereinheit oder sichere Steuereinrichtung, insbesondere die sicherheitsbezogene Einrichtung der sicheren Steuereinheit feldbusunabhängig oder nicht über den Feldbus an den Busmaster angeschlossen und kommuniziert feldbusunabhängig mit diesem, insbesondere bidirektional.

Da die erste Steuereinheit nicht direkt an den Feldbus, sondern, vorzugsweise unmittelbar mittels einer ersten Schnittstelle an den Busmaster angeschlossen ist, können die fehlersicheren Daten von der ersten Steuereinheit über die erste Schnittstelle, vorzugsweise eine ohnehin vorhandene sogenannte Multiport-Memory-Schnittstelle, an den Busmaster übermittelt werden. Diese Schnittstelle kann auch eine oder mehrere Ethernet-Schnittstellen, insbesondere auch Fast-Ethernet-Schnittstellen umfassen.

Anschließend fügt der Busmaster die fehlersicheren Daten lediglich noch in die Feldbustelegramme bzw. den Summenrahmen der Feldbuskommunikation ein, um die Daten an die Signaleinheiten zu übermitteln. Demnach werden die sicherheitsrelevanten Daten auf Datenebene an die entsprechenden Signaleinheiten übermittelt und so das ursprünglich nicht sichere Busprotokoll auf Datenebene "sicher" gemacht.

Die Kommunikation der sicheren Steuereinheit und dem Busmaster über die parallele oder nicht-serielle Multiport-Memory-Schnittstelle ist erheblich effizienter und bietet z.B. mehr Diagnosemöglichkeiten als eine Kommunikation über den Feldbus.

Mit anderen Worten erzeugt die sichere Steuereinheit das sicherheitsgerichtete Protokoll und übermittelt dieses an den Busmaster. Die Kommunikation auf dem Feldbus wird anschließend insbesondere derart abgewickelt, dass das sicherheitsgerichtete Protokoll von dem Busmaster direkt und/oder ohne eigene sicherheitsrelevante Funktionalität als Nutzdaten in die Feldbustelegramme eingefügt und an die sicheren Signaleinheiten übertragen wird.

Es wird also verglichen mit der in dem Dokument DE 199 28 517 C2 vorgeschlagenen Lösung gerade der entgegengesetzte Weg beschritten, nämlich die sichere Steuereinheit direkt und nicht über den Feldbus mit dem Busmaster zu verbinden. Somit werden Nachteile, welche durch dieses System erkauft wurden, erfindungsgemäß vermieden.

Zwar ist gemäß der vorliegenden Erfindung eine Nachrüstung eines vorhandenen Steuerungssystems nicht so einfach möglich, wie dies durch die Anbindung der sicheren Steuereinheit an den Feldbus gemäß der DE 199 28 517 C2 erzielt wird, so dass auf den ersten Blick der Eindruck eines Rückschrittes demgegenüber entstehen könnte.

Es mag für den für den Fachmann überraschend erscheinen, dass jedoch andere erhebliche Vorteile gegenüber dieser Lösung erzielt werden können, welche möglicherweise vorhandene Nachteile bei weitem überwiegen.

Insbesondere ist eine wesentlich engere und schnellere Kommunikation zwischen der sicheren Steuereinheit und dem Busmaster ermöglicht.

So ist gemäß einer Ausführungsform der Erfindung vorgesehen, die Verbindung zwischen der sicheren Steuereinheit und dem Busmaster mittels einer Ethernet-Verbindung mit entsprechenden Schnittstellen, insbesondere auch einer Fast-Ethernet Verbindung herzustellen.

Ferner ist bereits die Kommunikation zwischen der Steuereinheit und dem Busmaster sicher.

Überdies ist eine flexible Reaktion auf Fehler dahingehend ermöglicht, dass nicht jeder Fehler unmittelbar zu einem Abschalten des Systems führen muss, sondern bei vorbestimmten Fehlern das System mit einem Notfallprogramm weiterbetrieben werden kann.

Mit diesem vom Feldbus oder Netzwerk unabhängigen Verfahren ist die Sicherheitstechnik also effizienter und deutlich sicherer als bei den vorbekannten Steuerungssystemen gestaltet.

Im Falle einer rahmenbasierten Übertragung über den Feldbus fügt der Busmaster z.B. die fehlersicheren Daten der sicheren Steuereinheit in den Feldbusrahmen ein, um die Daten an die Signaleinheit zu übermitteln.

Diese feldbusunabhängige Kommunikation zwischen der sicheren Steuereinheit und dem Busmaster besitzt gleich mehrere Vorteile.

Zunächst ist vorteilhaft, dass ein Datenaustausch zwischen der sicheren Steuereinheit und dem Busmaster auch dann stattfinden kann, wenn die Kommunikation über den Feldbus nicht aktiv ist. Dies kann z.B. dazu genutzt werden, dass die sichere Steuereinheit den Busmaster derart steuert, dass dieser erst und nur dann in Betrieb genommen wird, wenn eine vorbestimmte Funktionalität, z.B. ein sicherer Betriebszustand der sicheren Steuereinheit sichergestellt ist.

Z.B. wird der Busmaster erst dann in Betrieb genommen, wenn die sichere Steuereinheit einen Selbsttest erfolgreich durchlaufen hat. Der Selbsttest wird insbesondere selbsttätig nach jedem Einschalten der sicheren Steuereinheit (sogenanntes PowerUp) durchgeführt. Vorzugsweise wird der Busmaster von der sicheren Steuereinheit während des Selbsttests deaktiviert oder funktionsunfähig, z.B. in einen Reset-Zustand geschaltet.

Alternativ oder ergänzend kann der Busmaster nach dem Einschalten, also insbesondere nach dem Selbsttest der Steuereinheit ebenfalls einen Selbsttest durchführen, so dass die Sicherheit des Systems weiter erhöht wird.

Mit anderen Worten wird der Busmaster erst nach dem erfolgreichen Selbsttest der ersten Steuereinheit und/oder des Busmasters in einen Betriebszustand geschaltet. Hierdurch kann erreicht werden, dass die Kommunikation über den Feldbus überhaupt nicht erst aufgenommen wird, wenn eine Fehlfunktion des Busmasters oder der sicheren Steuereinheit vorliegt. Weiter vorteilhaft ist, wenn der Busmaster nur solange aktiv ist, solange die erste Steuereinheit aktiv ist.

Vorzugsweise sind der Busmaster und die erste Steuereinheit separate Bauelemente, welche über die erste feldbusunabhängige Schnittstelle, miteinander verbunden sind. Gemäß einer vorteilhaften Ausgestaltung kommunizieren der Busmaster und die erste Steuereinheit mittels eines Ethernet-Protokolls. Eine Ethernet- oder Fast-Ethernet-Verbindung erlaubt es so unter anderem, die erste Steuereinheit und/oder den Busmaster auch in ein bestehendes oder einzurichtendes weiteres Netzwerk einzubinden. Auch kann eine Kommunikation über ein Ethernet-Protokoll, insbesondere mittels Fast-Ethernet deutlich schneller, als über einen üblichen Feldbus erfolgen.

Vorzugsweise ist der serielle Feldbus ein Interbus und der Busmaster ist ein Standard-G4-Busmaster, also ein nicht sicherer Busmaster gemäß der Norm EN 50254.

Ein solcher G4-Busmaster besitzt, wie vorstehend bereits ausgeführt wurde, eine sogenannte Multiport-Memory-Schnittstelle mittels welcher die sichere Steuereinheit an den Busmaster angeschlossen ist. Demgemäss findet die Datenübertragung zwischen dem Busmaster und der sicheren Steuereinheit über die Multiport-Memory-Schnittstelle, die auch eine Ethernet-Schnittstelle umfassen kann, und nicht über den Feldbus statt.

Dabei stellt insbesondere die erste Steuereinheit sichere Steuerdaten und ein Sicherheitsprotokoll für die sichere Kommunikation bereit und übermittelt die sicheren Steuerdaten und ein Sicherheitsprotokoll an den Busmaster. Der Busmaster wiederum ordnet die sicheren Steuerdaten und das Sicherheitsprotokoll, insbesondere ohne Veränderung dieser Information, als Nutzdaten in die Feldbustelegramme ein. Der Busmaster besitzt zum Anschluss an den Feldbus eine zweite Schnittstelle mittels welcher Daten über den Feldbus übermittelt werden, wobei die erste und zweite Schnittstelle vorzugsweise voneinander getrennt sind.

Durch die vorstehend beschriebenen Merkmale des Systems kann in vorteilhafter Weise ein einheitlicher, alleine nicht sicherer Busmaster für verschiedene sicherheitsrelevante Steuerungen eingesetzt werden.

Gemäß einer weiteren vorteilhaften Ausführungsform der Erfindung ist der Feldbus als Ethernet-Bus, besonders vorteilhaft auch als Fast-Ethernet-Bus ausgebildet. Mit einem derartigen Bus können sehr hohe Datenübertragungsraten -möglich sind etwa 100 Mbit/s bei einer Fast-Ethernet-Übertragung- erreicht werden. Ein weiterer Vorteil ist unter anderem auch die einfache Integration in vorhandene Netzwerke.

Weiter bevorzugt ist eine Ausführungsform, bei welcher die sichere Steuereinheit vor dem Feldbusanschluss an den Busmaster angeschlossen ist, so dass eine voreilende Verarbeitung von sicherheitsrelevanten Daten erfolgt.

Besonders bevorzugt sind der Busmaster und die sichere Steuereinheit in einer gemeinsamen Anschaltbaugruppe integriert. Mit anderen Worten ist die von der sicheren Steuereinheit bereitgestellte Sicherheitstechnik in die Busmaster-Anschaltung integriert. Dies ermöglicht unter anderem, dass die sichere Steuereinheit die Software der Anschaltbaugruppe, welche den Busmaster enthält, prüfen kann und ausschließlich bei einem positiven Prüfergebnis die sichere Steuereinheit oder Steuerung der sicherheitskritischen Prozesse aufnimmt. Hierfür kann der Busmaster durch die sichere Steuereinheit gesteuert werden.

Beim Interbus läuft die Kommunikation über den Feldbus zyklisch ab. Vorzugsweise ist dabei jeder Zyklus in einen Verarbeitungszyklus der sicheren Steuereinheit und einen Buszyklus, in welchem Daten zu der Signaleinheit über den Feldbus transferiert werden, unterteilt. Weiter bevorzugt werden der Verarbeitungszyklus und der Buszyklus kontinuierlich und synchronisiert abgearbeitet.

Da bei vielen Anwendungen eine Vielzahl von Prozessen gesteuert wird und unter den Prozessen auch nicht sicherheitskritische Prozesse sind, umfasst das System vorzugsweise außer der sicheren Steuereinheit zumindest noch eine zweite nicht sichere Steuereinheit zur nicht sicheren Steuerung von nicht sicherheitskritischen Prozessen. Auch diese nicht sichere Steuerung erfolgt bevorzugt synchronisiert.

Der Busmaster kommuniziert in diesem Fall z.B. mittels einer dritten Schnittstelle mit der zweiten Steuereinheit, wobei die erste, zweite und/oder dritte Schnittstelle jeweils voneinander getrennt sind. Dabei kann vorgesehen sein, dass die erste und zweite Steuereinheit Daten miteinander austauschen und zwar ggf. sogar dann, wenn der Busmaster deaktiviert ist. Auch die dritte Schnittstelle kann vorteilhaft eine Ethernet-Schnittstelle, auch beispielsweise eine Fast-Ethernet-Schnittstelle für eine Kommunikation des Busmasters mit der zweiten Steuereinheit mittels eines Ethernet-Protokolls umfassen. Auch können die zweite Steuereinheit und die erste Steuereinheit dann über eine Ethernet-Verbindung miteinander kommunizieren, wenn die erste Steuereinheit ebenfalls mit einer Ethernet-Schnittstelle ausgerüstet ist.

Ein besonderer Vorteil der Erfindung liegt darin begründet, dass das System unter bestimmten Voraussetzungen auch dann weiter betrieben werden kann, wenn eine Fehlfunktion auftritt. Z.B. sind bevorzugt zumindest zwei Betriebszustände definiert, nämlich ein erster sicherer Betriebszustand und ein zweiter Betriebszustand, welcher gegenüber dem ersten Betriebszustand eine verminderte Sicherheit aufweist. Dieser zweite Betriebszustand ist z.B. ein Notlaufprogramm. Dabei wird das System von der sicheren Steuereinheit in den zweiten Betriebszustand überführt, wenn vorbestimmte Sicherheitsinformationen vorliegen.

Die vorbestimmten Sicherheitsinformationen können einerseits von den sicheren Signaleinheiten über den Feldbus übermittelt werden und von der sicheren Steuereinheit ausgewertet werden. Stellt die sichere Steuereinheit eine Fehlfunktion fest, überführt sie das System in den zweiten Betriebszustand.

Andererseits kann die vorbestimmte Sicherheitsinformation aber auch in der sicheren Steuereinheit selbst generiert werden. Beispielsweise weist die sichere Steuereinheit zumindest zwei Prozessoren (CPU) auf, welche regelmäßig gegenseitig abgeglichen werden, um die Sicherheit zu erhöhen. Bei einem Ausfall eines der beiden Prozessoren ist das System dennoch in Lage auf einem verminderten Sicherheitsniveau, d.h. in dem zweiten Betriebszustand weiterzuarbeiten. Dies ermöglicht einen, insbesondere zeitlich begrenzten Notlaufbetrieb des Systems, so dass das System kontrolliert heruntergefahren werden kann oder ein defektes Bauteil erst z.B. bei einem Schichtwechsel ausgewechselt werden kann.

Um einen dauerhaften Betrieb in dem zweiten Betriebszustand zu verhindern, wird das Steuerungssystem vorzugsweise nach Ablauf einer vorbestimmten Zeitspanne von der ersten Steuereinheit automatisch deaktiviert oder funktionsunfähig geschaltet.

Gegenstand der Erfindung sind ferner die sichere Steuereinheit und die Anschaltbaugruppe mit dem Busmaster und der sicheren Steuereinheit, hergerichtet zur Verwendung in dem erfindungsgemäßen Steuerungssystem.

Im Folgenden wird die Erfindung anhand von Ausführungsbeispielen und unter Bezugnahme auf die Zeichnungen näher erläutert.

### Kurzbeschreibung der Figuren

Es zeigen:
- Fig. 1: eine schematische Übersicht über das erfindungsgemäße Steuerungssystem,
- Fig. 2: ein Blockdiagramm des erfindungsgemäßen Steuerungssystems,
- Fig. 3: eine schematische Darstellung mehrerer Zyklen der Übertragung über den Interbus und
- Fig. 4: eine detailliertere Darstellung eines Interbus-Zyklus aus Fig. 3.

### Detaillierte Beschreibung der Erfindung

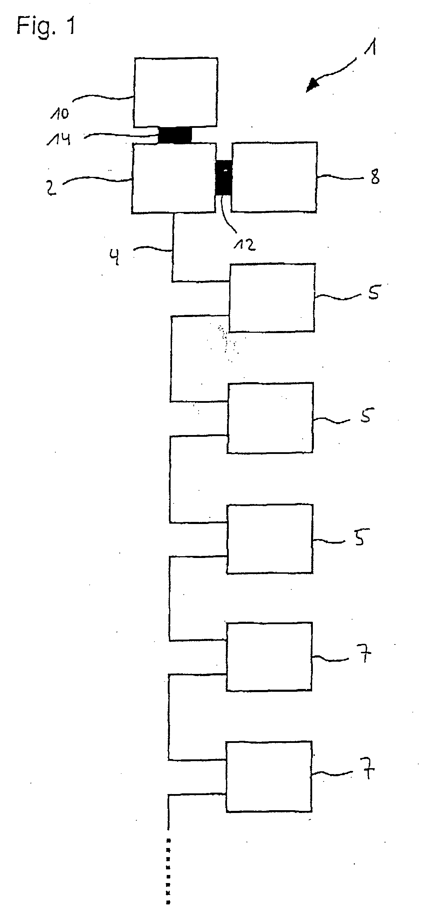

Fig. 1 zeigt ein Steuerungssystem 1 mit einem Busmaster 2, welcher die Kommunikation über einen Feldbus 4 mit einer Vielzahl von Signaleinheiten, auch Busteilnehmer genannt, steuert.

Die Signaleinheiten umfassen sowohl sichere als auch nicht sichere Signaleinheiten 5, 7, wobei die sicheren Signaleinheiten 5 von einer Steuereinheit mit Sicherheitsfunktion 8, kurz sichere Steuereinheit 8 und die nicht sicheren Signaleinheiten 7 von einer Steuereinheit ohne Sicherheitsfunktion 10, kurz nicht sicheren Steuereinheit 10 gesteuert werden.

Die sichere und die nicht sichere Steuereinheit sind nicht direkt an den Feldbus 4, sondern mittels in Bezug auf den Feldbus separate Schnittstellen 12, 14 direkt an den Busmaster 2 angeschlossen.

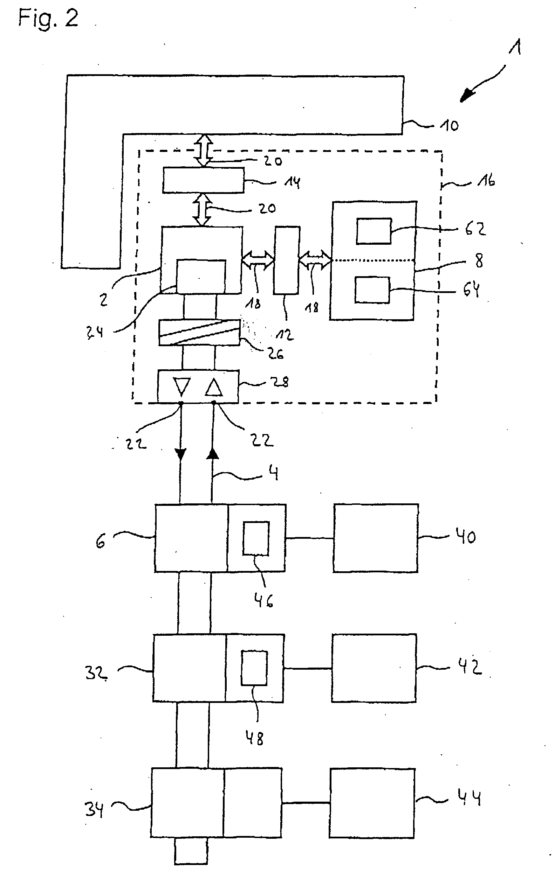

Bezug nehmend auf Fig. 2 ist eine detailliertere Darstellung des Steuerungssystems 1 mit drei beispielhaften Signaleinheiten gezeigt.

Der Busmaster 2 ist ein Standard G4-Busmaster und ist gemeinsam mit der sicheren Steuereinheit 8 in einer Anschaltbaugruppe 16, welche als Einschubmodul realisiert ist, integriert. Die Anschaltbaugruppe 16 ist in diesem Beispiel eine Interbus-Anschaltbaugruppe IBS S7 400 ETH S DSC/I-T. Der serielle Feldbus ist somit als Interbus nach der Norm EN 50254 bzw. nach DIN 19258 ausgebildet. Die Sicherheitstechnik wird also als integraler Bestandteil der Interbus Anschaltung organisiert. Gemäß einer anderen Ausgestaltung des in Fig. 2 dargestellten Steuerungssystems ist der Feldbus 4 als Ethernet-Bus ausgebildet. Der Ethernet-Bus kann insbesondere auch ein Fast-Ethernet-Bus sein.

Der G4-Busmaster 2 weist eine Multiport-Memory-Schnittstelle auf, welche funktionell in die Schnittstelle 12 für die Steuereinheit mit Sicherheitsfunktion 8 und die Schnittstelle 14 für die Steuereinheit ohne Sicherheitsfunktion 10 unterteilt ist. Über diese Schnittstellen 12, 14 ist jeweils eine bidirektionale Kommunikation 18, 20 zwischen der sicheren Steuereinheit 8 und dem Busmaster 2 einerseits sowie zwischen der nicht sicheren Steuereinheit 10 und dem Busmaster 2 andererseits ermöglicht. Die Kommunikation kann gemäß einer Ausgestaltung dieses Ausführungsbeispiels mittels eines Ethernet-Protokolls erfolgen, wobei die Schnittstellen 12, 14 in diesem Fall demgemäß als Ethernet-Schnittstellen ausgebildet sind.

Erfindungsgemäß ist die Verarbeitung durch die Steuereinheiten 8, 10 zunächst feldbusunabhängig und voreilend, da die Steuereinheiten 8, 10 vor dem Feldbusanschluss 22 an den Feldbusmaster 2 angeschlossen ist.

Weiter Bezug nehmend auf Fig. 2 weist der Busmaster 2 einen Interbus Protokoll Master Chip (IPMS) 24 auf. An den IPMS Protokollchip 24 ist mittels einer galvanischen Trennung, z.B. einem Optokoppler 26 ein RS422-Treiber 28 für die Feldbussignale angeschlossen.

Die Anschaltbaugruppe 16 weist ferner zwei Anschlusspunkte für den umlaufenden seriellen Feldbus 4 in Form einer Remote Interbusschnittstelle 22 auf, welche hier als DSUB-Steckverbinder realisiert ist.

Es ist ferner ein parametrierbarer Bypass oder eine Verbindung von der sicheren Steuereinheit 8 zur nicht sicheren Steuereinheit 10 vorgesehen (in der Figur nicht dargestellt).

Über den Bypass sind die nicht sichere Steuereinheit 10 und die sichere Steuereinheit 8 in der Lage auch ohne Funktionalität des IPMS Protokollchips 24 Daten auszutauschen.

Im Notfall oder bei einer Fehlfunktion kann somit die sichere Steuereinheit mittels des Bypass die Aufgaben der nicht sicheren Steuereinheit oder die Steuerung der nicht sicheren Prozesse übernehmen. Auch kann eine sichere Abschaltstrategie (Stop-Kat 1 oder 2) oder eine Notlauf-Funktionalität mit diesem System durchgeführt werden.

Diese engere Synchronisierung der Komponenten Feldbusmaster 2 sichere Steuereinheit 8 und nicht sichere Steuereinheit 10 ermöglicht in vorteilhafter Weise eine effizientere Abarbeitung und einen höheren Diagnosegrad.

An den Feldbus 4 sind seriell die sichere Signaleinheit 6, eine weitere sichere Signaleinheit 32 und eine nicht sichere Signaleinheit 34 angeschlossen. Die Signaleinheiten 6, 32 und 34 sind weiter mit Prozessen 40, 42 bzw. 44 verknüpft, welche von den Steuereinheiten 8 bzw. 10 über den Feldbus 4 und die entsprechenden Signaleinheiten 6, 32 bzw. 34 gesteuert und überwacht werden.

Dabei sind die Prozesse 40 und 42 sicherheitskritische Prozesse und der Prozess 44 ein nicht sicherheitskritischer Prozess. Die sicheren Signaleinheiten 6, 32 sind z.B. sichere Slave-Module SDIO 4/4, welche zur Abwicklung der sicheren Steuerung der sicherheitskritischen Prozesse 40, 42 jeweils eine sicherheitsbezogene Einrichtung 46, 48 aufweisen.

Ein sicherheitskritischer Prozess kann z.B. eine Not-Aus-Funktion oder die Überwachung eines Sicherheitskäfigs sein. Selbstverständlich können weitere Signaleinheiten und Prozesse an den Feldbus angeschlossen werden.

Wieder Bezug nehmend auf die Anschaltbaugruppe 16, sind dort die folgenden Mechanismen vorgesehen.

Es findet beim Hochfahren des Feldbusses 4 und der sicheren Steuerung 8 eine gegenseitige Überprüfung nach folgendem Ablauf statt:
- Die sichere Steuereinheit 8 führt einen Selbsttest nach dem PowerUp durch und hält während dieser Zeit den Busmaster 2 mittels der über die Schnittstelle 12 stattfindenden Kommunikation 18 z.B. über eine Reset-Leitung im Reset.
- Erst nach erfolgreichem Test der sicheren Steuereinheit 8 wird der Busmaster 2 in Betrieb genommen. Wird also die sichere Steuereinheit 8 entfernt bzw. weist sie einen Defekt auf, so wird der Anlauf des Busmasters 2 verhindert. Nach dem erfolgreichem Test der sicheren Steuereinheit 8 durchläuft der Busmaster 2 seinerseits einen Selbsttest.
- Nach erfolgreichem Selbsttest des Busmasters 2 übermittelt dieser seine Versionskennung an die sichere Steuereinheit. Nachfolgend wird der Ausgabestand der Firmware der Anschaltbaugruppe 16 durch entsprechende Prüfmittel in der sicheren Steuereinheit 8 geprüft.

Ferner ist die sichere Steuereinheit 8 derart eingerichtet, dass sie nur bei Busmastern, die sicherheitsfähige Funktionalitäten beinhalten können, ihre Tätigkeit aufnimmt.

Darüber hinaus ist der Feldbus 4 nur solange aktiviert, solange die sichere Steuereinheit 8 aktiv ist.

Hierdurch wird bereits ein erheblicher Sicherheitsgewinn erzielt, da eine mehrfache Kontrolle der Sicherheitsfunktion gewährleistet ist.

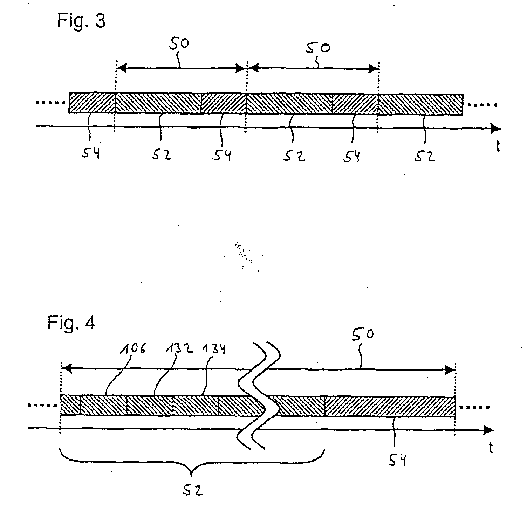

Bezug nehmend auf Fig. 3 und 4 wird eine zusätzliche Steigerung der Sicherheit und der Reaktionsgeschwindigkeit, welche erfindungsgemäß erzielt wird, erläutert.

Es werden nämlich während der Laufzeit des Systems der Feldbuszyklus und der sichere Steuerungszyklus synchronisiert abgearbeitet. Dadurch kann der Feldbus 4 ohne eine dauerhafte oder kontinuierliche Synchronisierung mit der sicheren Steuereinheit 8 nicht laufen.

Fig. 3 zeigt diesbezüglich mehrere Feldbuszyklen 50. Jeder Feldbuszyklus ist in einen Verarbeitungszyklus 52 der sicheren Steuereinheit und einen Interbus E/A-Zyklus 54 unterteilt. In dem Interbus E/A-Zyklus 54 werden die Daten zu den Signaleinheiten 6, 32, 34 transferiert.

Fig. 4 zeigt einen Feldbuszyklus 50 oder genauer Interbuszyklus in Detail. Hierbei enthält der Verarbeitungszyklus 52 Felder 106, 132 und 134, wobei jedes Feld jeweils einer der Signaleinheiten 6, 32 bzw. 34 zugeordnet ist und die Steuer- bzw. Nutzdaten für die jeweilige Signaleinheit enthält. Jedes Feld oder Nutzdatenfeld wiederum ist aus einer Mehrzahl von Bustelegrammen z.B. 'aus je drei Bustelegrammen ä ein Byte aufgebaut.

Die sichere Steuereinheit 8 stellt folglich auf Datenebene Nutzdaten und sicherheitsprotokollrelevante Daten bereit, wobei die sicherheitsprotokollrelevanten Daten über den Feldbus aus der Sichtweise des Busmasters 2 als Nutzdaten transportiert werden. Somit erfolgt insbesondere keine sicherheitsrelevante Interpretation durch den Busmaster 2 selbst. Dies hat den Vorteil, dass ein "nicht sicherer" Standard-G4-Busmaster verwendet werden kann.

Bezüglich der Abfolge und des Aufbaus der Felder wird auf die Patentschrift DE 197 42 716 C1 derselben Anmelderin verwiesen, welche hiermit durch Referenz vollumfänglich zum Gegenstand dieser Offenbarung gemacht wird.

Eine ähnliche Synchronisierung wie für die sichere Steuerung 8 kann erfindungsgemäß auch zur nicht sicheren Steuerung 10 erfolgen. Diese Funktion kann Mittels "Tot-Mann" Signals (z.B. Toggel-Bit) aus der nicht sicheren Steuerung zur sicheren Steuerung erfolgen. Diese Art der Verkettung erhöht die Übergabegeschwindigkeit und die Deterministik im System 1.

Ferner kann eine individuelle Umprogrammierung der sicheren Steuerung 8 zur Laufzeit vorgesehen sein. Mit der direkten Integration und der Anbindung an die nicht sichere Steuerung 10 bzw. einer überlagerten Netzwerkstruktur kann die sichere Steuerung 8 in allen Betriebsphasen, insbesondere bei nicht lauffähigem Feldbus 4, erreicht und auf diese eingewirkt werden. Somit ist eine vereinfachter Zugriff auf Diagnosedaten bis hin zu einer Umprogrammierung zur Laufzeit bzw. im Stopp des Netzwerkes möglich. Gemäß dem in Dokument DE 199 28 517 C2 vorgeschlagenen System ist das lediglich bei lauffähigen Feldbus oder möglicherweise über einen zusätzlichen Netzwerkanschluss auf der sicheren Steuerung möglich.

Zusätzlich können erfindungsgemäß durch die Verkettung von Netzwerk oder Busmaster 2 und der sicheren Steuerung 8 weitere sicherheitstechnische Funktionalitäten organisiert werden, die mit einer von der Anschaltbaugruppe 16 abgekoppelten Sicherheitstechnik nur begrenzt möglich sind.

Wieder Bezug nehmend auf Fig. 2 weist die sichere Steuerung zwei Prozessoren oder CPUs 62 und 64 auf, wobei jeder Prozessor einem bestimmten sicherheitskritischen Prozess zugeordnet ist. Dabei steuert der Prozessor 62 die Prozesse 40 und 42 und der Prozessor 64 ebenfalls die Prozesse 40 und 42. Fällt nun einer der beiden Prozessoren 62 oder 64 auf der sicheren Steuerung 8 aus oder wird die Sicherheitstechnik gestört, ist die sichere Steuerung 8 derart eingerichtet, dass sie die Steuerung der sicherheitskritischen Prozesse 40, 42, ggf. im Zusammenspiel mit dem Busmaster, in einem Betriebszustand mit verminderter Sicherheit, einem sogenannten Notfallprogramm, weiter betreiben kann.

Insbesondere findet zwischen den Prozessoren 62 und 64 und ggf. mit weiteren Prozessoren ein gegenseitiger Abgleich statt, wobei das System 1 in einem Notlaufprogramm weiterläuft, wenn einer der Prozessoren 62 oder 64 ausfällt.

Hierzu wird die sichere Steuereinheit 8 z.B. mittels Parametrierung in die Lage versetzt auf Fehler des Systems zu reagieren. Im folgenden werden hierzu beispielhaft drei mögliche Fehler und die Systemreaktion bzw. -funktion dargestellt.

Fehler A: Die nicht sichere Steuerung 10 fällt aus oder weist eine Fehlfunktion auf.

Das System 1 reagiert auf den Fehler A dadurch, dass die sichere Steuerung 8 die Steuerfunktion der nicht sicheren Steuerung 10 zumindest teilweise übernimmt.

Hierzu wird eine Information von der nicht sicheren Steuereinheit 10 über den Fehler oder Defekt an die sichere Steuereinheit 8 übermittelt. Daraufhin übernimmt ein Reaktionsprogramm die gewünschte Tätigkeit.

Fehler B: Die CPU 62 der sicheren Steuereinheit 8 fällt aus.

Die sichere Steuereinheit 8 wird von dem ersten in den zweiten Betriebszustand geschaltet und arbeitet mit verminderter Sicherheit weiter.

Ferner wird eine Information an den sicherheitskritischen Prozess 42 übermittelt, welcher von der funktionsfähigen CPU 64 gesteuert wird, dass ein Fehler aufgetreten ist. Nachfolgend übernimmt ein Reaktionsprogramm, z.B. für eine vorbestimmte Zeit, die gewünschte Tätigkeit.

Fehler C: Die CPU 64 der sicheren Steuereinheit 8 fällt aus.

Die sichere Steuereinheit 8 wird von dem ersten in den zweiten Betriebszustand geschaltet und arbeitet mit verminderter Sicherheit weiter.

Die Funktion des Steuerungssystems 1 entspricht derjenigen bei dem Fehler B.

Demgemäss kann bei einem Ausfall eines Teiles der Sicherheitstechnik der Busmaster 2 und die verbliebene Teilfunktion der Sicherheitstechnik das System 1 weiter betreiben. Somit ist das System 1 weiter betreibbar auch wenn die Sicherheitstechnik nur mit einer geringeren Sicherheit funktionsfähig ist.

Im folgenden wird an einem praktischen Beispiel der Vorteil der sicheren Steuerung mit einem solchen Notfallprogramm bzw. einem Betrieb mit zwei Betriebszuständen mit unterschiedlicher Sicherheitsstufe erläutert.

Mit dem System 1 wird eine Luftseilbahn gesteuert.

Bislang führte der Ausfall der Sicherheitstechnik zum Stop der Seilbahngondel bzw. des Transportes. Die beförderten Personen mussten daraufhin vom Boden bzw. aus der Luft aus den Gondel gerettet werden. Das durch die Rettung erzeugte Risiko, z.B. Erfrierungen bei widrigem Wetter und langen Wartezeiten, Gefahr durch Rettungsversuche durch den Hubschrauber ist dabei unverhältnismäßig hoch.

Bei der erfindungsgemäßen Lösung ist die Wahrscheinlichkeit eines vollständigen Ausfalls geringer. Das erfindungsgemäße System mit der Anschaltbaugruppe 16 oder Netzwerkkarte mit den zwei vorstehend beschriebenen Betriebszuständen gestattet nämlich einen weiteren Betrieb mit verminderter Sicherheit in den zweiten Betriebszustand, so dass wenigstens eine Entladung der Seilbahn ermöglicht ist. Hierfür kann eine zeitliche Begrenzung des Betriebs mit verminderter Sicherheit vorgesehen sein.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Geist der Erfindung zu verlassen.

## Patentansprüche

1. Steuerungssystem (1) zum Steuern von sicherheitskritischen Prozessen (40, 42) über einen Feldbus (4), umfassend
den Feldbus (4),
einen Busmaster (2) zum Steuern der Kommunikation (50) über den Feldbus (4),
zumindest eine Signaleinheit (6, 32) zum Verknüpfen mit zumindest einem der sicherheitskritischen Prozesse (40, 42), wobei der Busmaster (2) und die Signaleinheit (6, 32) über den Feldbus (4) miteinander verbunden sind und wobei über den Feldbus (4) eine Kommunikation (50) der Signaleinheit (6, 32) mit dem Busmaster (4) bereitgestellt ist,
eine erste Steuereinheit (8) zum Steuern der sicherheitskritischen Prozesse (40, 42),
wobei die Signaleinheit (6, 32) und die erste Steuereinheit (8) sicherheitsbezogene Einrichtungen (46, 48) aufweisen und eine fehlersichere Kommunikation bereitgestellt ist, um die sicherheitskritischen Prozesse (40, 42) zu steuern,
**dadurch gekennzeichnet, dass**
die erste Steuereinheit (8) feldbusunabhängig an den Busmaster (2) angeschlossen ist.

2. Steuerungssystem (1) nach Anspruch 1,
**dadurch gekennzeichnet, dass**
der Busmaster (2) und die erste Steuereinheit (8) separate Bauelemente sind, welche über eine erste Schnittstelle (12) miteinander verbunden sind.

3. Steuerungssystem (1) nach einem der vorstehenden Ansprüche,
**dadurch gekennzeichnet, dass**
der Busmaster (2) ein nicht sicherer Busmaster ist und über eine Multiport-Memory-Schnittstelle (12, 14) mit der ersten Steuereinheit (8) verbunden ist.

4. Steuerungssystem gemäß einem der vorstehenden Ansprüche, **dadurch gekennzeichnet, daß** der Busmaster (2) über eine Ethernet-Verbindung mit der ersten Steuereinheit (8) verbunden ist.

5. Steuerungssystem (1) nach einem der vorstehenden Ansprüche,
**dadurch gekennzeichnet, dass**
die erste Steuereinheit (8) ein Sicherheitsprotokoll für die sichere Kommunikation bereitstellt und an den Busmaster (2) übermittelt.

6. Steuerungssystem (1) nach einem der vorstehenden Ansprüche,
**dadurch gekennzeichnet, dass**
die Datenübertragung zwischen dem Busmaster (2) und der ersten Steuereinheit (8) nicht über den Feldbus (4) stattfindet.

7. Steuerungssystem (1) nach einem der vorstehenden Ansprüche,
**dadurch gekennzeichnet, dass**
der Busmaster (2) eine zweite Schnittstelle (22) zur Eingabe/Ausgabe von Daten über den Feldbus (4) aufweist und die erste und zweite Schnittstelle (12, 22) voneinander getrennt sind.

8. Steuerungssystem (1) nach einem der vorstehenden Ansprüche,
**dadurch gekennzeichnet, dass**
die erste Steuereinheit (8) vor dem Feldbusanschluss (21) an den Busmaster (2) angeschlossen ist, so dass eine voreilende Verarbeitung von sicherheitsrelevanten Daten erfolgt.

9. Steuerungssystem (1) nach einem der vorstehenden Ansprüche,
**dadurch gekennzeichnet, dass**
eine Anschaltbaugruppe (16) umfasst ist, welche den Busmaster (2) und die sichere erste Steuereinheit (8) enthält.

10. Steuerungssystem (1) nach einem der vorstehenden Ansprüche,
**dadurch gekennzeichnet, dass**
die erste Steuereinheit (8) den Busmaster (2) steuert.

11. Steuerungssystem (1) nach einem der vorstehenden Ansprüche,
**dadurch gekennzeichnet, dass**
die erste Steuereinheit (8) nach dem Einschalten selbsttätig einen Selbsttest durchführt und während des Selbsttests den Busmaster (2) deaktiviert.

12. Steuerungssystem (1) nach einem der vorstehenden Ansprüche,
**dadurch gekennzeichnet, dass**
der Busmaster (2) nach dem Einschalten, insbesondere nach dem Selbsttest der ersten Steuereinheit (8) einen Selbsttest durchführt.

13. Steuerungssystem (1) nach einem der vorstehenden Ansprüche,
**dadurch gekennzeichnet, dass**
der Busmaster (2) erst nach dem erfolgreichen Selbsttest der ersten Steuereinheit (8) und/oder des Busmasters (2) in einen Betriebszustand geschaltet wird.

14. Steuerungssystem (1) nach einem der vorstehenden Ansprüche,
**dadurch gekennzeichnet, dass**
der Busmaster (2) nur solange aktiv ist, solange die erste Steuereinheit (8) aktiv ist.

15. Steuerungssystem (1) nach einem der vorstehenden Ansprüche,
**dadurch gekennzeichnet, dass**
die erste Steuereinheit (8) die Software der Anschaltbaugruppe (16) prüft und ausschließlich bei einem positivem Ergebnis die sichere Steuerung der sicherheitskritischen Prozesse (40, 42) aufnimmt.

16. Steuerungssystem (1) nach einem der vorstehenden Ansprüche,
**dadurch gekennzeichnet, dass**
die Kommunikation über den Feldbus (4) zyklisch abläuft und ein Zyklus (50) in einen Verarbeitungszyklus (52) der ersten Steuereinheit und einen Buszyklus (54), in welchem Daten zu der Signaleinheit (40, 42) über den Feldbus (4) transferiert werden, unterteilt ist.

17. Steuerungssystem (1) nach Anspruch 16,
**dadurch gekennzeichnet, dass**
der Verarbeitungszyklus (52) und der Buszyklus (54) synchronisiert abgearbeitet werden.

18. Steuerungssystem (1) nach einem der vorstehenden Ansprüche,
**dadurch gekennzeichnet, dass**
zumindest eine zweite Steuereinheit (10) umfasst ist, welche eine nicht sichere Steuerung zumindest eines nicht sicherheitskritischen Prozesses (44) bereitstellt.

19. Steuerungssystem (1) nach Anspruch 18,
**dadurch gekennzeichnet, dass**
der Busmaster (2) mittels einer dritten Schnittstelle (14) mit der zweiten Steuereinheit (10) kommuniziert,
wobei die zweite und dritte Schnittstelle (22, 14) voneinander getrennt sind.

20. Steuerungssystem nach Anspruch 19,
**dadurch gekennzeichnet, dass** die dritte Schnittstelle (14) eine Ethernet-Schnittstelle umfaßt.

21. Steuerungssystem (1) nach einem der Ansprüche 18 bis 20,
**dadurch gekennzeichnet, dass**
die erste und zweite Steuereinheit (8, 10) miteinander Daten austauschen, wenn der Busmaster (2) deaktiviert ist.

22. Steuerungssystem (1) nach einem der Ansprüche 18 bis 21,
**dadurch gekennzeichnet, dass**
die nicht sichere Steuerung synchronisiert erfolgt.

23. Steuerungssystem (1) nach einem der vorstehenden Ansprüche,
**dadurch gekennzeichnet, dass**
zumindest ein erster sicherer Betriebszustand und ein zweiter Betriebszustand, welcher gegenüber dem ersten Betriebszustand eine verminderte Sicherheit aufweist, vorgesehen sind und die erste Steuereinheit (8) bei Vorliegen vorbestimmter Sicherheitsinformationen das Steuerungssystem (1) von dem ersten in den zweiten Betriebszustand überführt.

24. Steuerungssystem (1) nach Anspruch 23,
**dadurch gekennzeichnet, dass**
die erste Steuereinheit (8) zumindest zwei Prozessoren (62, 64) aufweist, welche regelmäßig gegenseitig abgeglichen werden und das System bei einer Fehlfunktion eines der beiden Prozessoren (62, 64) in den zweiten Betriebszustand überführt wird.

25. Steuerungssystem (1) nach Anspruch 23 oder 24,
**dadurch gekennzeichnet, dass**
die erste Steuereinheit (8) das Steuerungssystem (1) von dem ersten in den zweiten Betriebszustand überführt, wenn die vorbestimmten Sicherheitsinformationen von einer der Signaleinheiten (40, 42) über den Feldbus (4) übermittelt und von der ersten Steuereinheit (8) ausgewertet werden.

26. Steuerungssystem (1) nach Anspruch 23, 24 oder 25,
**dadurch gekennzeichnet, dass**
der zweite Betriebszustand zeitlich begrenzt ist.

27. Steuerungssystem (1) nach einem der vorstehenden Ansprüche,
**dadurch gekennzeichnet, dass**
der Feldbus ein Interbus gemäß der Norm EN 50254 ist.

28. Steuerungssystem (1) nach einem der Ansprüche 1 bis 26,
**dadurch gekennzeichnet, daß** der Feldbus ein Ethernet-Bus ist.

29. Steuerungssystem (1) zum Steuern von sicherheitskritischen Prozessen (40, 42) über einen Feldbus (4), insbesondere nach einem der vorstehenden Ansprüche, umfassend den Feldbus (4),
einen Busmaster (2) zum Steuern der Kommunikation (50) über den Feldbus (4),
eine Mehrzahl von Signaleinheiten (6, 32, 34), wobei zumindest eine der Signaleinheiten eine sichere Signaleinheit (6, 32) zum Verknüpfen mit einem der sicherheitskritischen Prozesse (40, 42) ist,
wobei der Busmaster (2) und die Signaleinheiten (6, 32, 34) über den Feldbus (4) miteinander verbunden sind und wobei über den Feldbus (4) eine Kommunikation der Signaleinheiten (6, 32, 34) mit dem Busmaster (2) bereitgestellt ist,
eine erste Steuereinheit (8),
wobei zwischen der ersten Steuereinheit (8) und der sicheren Signaleinheit (6, 32) eine fehlersichere Kommunikation (50) bereitgestellt ist, um die sicherheitskritischen Prozesse (40, 42) zu steuern,
**dadurch gekennzeichnet, dass**
die erste Steuereinheit (8) ein sicherheitsgerichtetes Protokoll erzeugt und an den Busmaster (2) übermittelt.

30. Steuerungssystem (1) nach Anspruch 29,
**dadurch gekennzeichnet, dass**
die Kommunikation (50) auf dem Feldbus (4) mittels Feldbustelegrammen (106, 132, 134) abgewickelt wird und das sicherheitsgerichtete Protokoll von dem Busmaster (4) mittels der Feldbustelegramme (106, 132, 134) an die sichere Signaleinheit (6, 32) übertragen wird.

31. Steuerungssystem (1) nach Anspruch 29 oder 30,
**dadurch gekennzeichnet, dass**
der Busmaster (2) das sicherheitsgerichtete Protokoll direkt und/oder ohne sicherheitsrelevante Funktionalität als Nutzdaten in die Feldbustelegramme (106, 132, 134) einfügt.

32. Steuerungssystem (1) zum Steuern von sicherheitskritischen Prozessen (40, 42) über einen Feldbus (4), insbesondere nach einem der vorstehenden Ansprüche, umfassend
eine erste Steuereinheit (8) zum Steuern eines sicherheitskritischen Prozesses (40, 42), mit einer Signaleinheit (6, 32), die über E/A-Kanäle mit dem sicherheitskritischen Prozess (40, 42) verknüpft ist,
den Feldbus (4),
einen Busmaster (2) zum Steuern der Kommunikation (50) über den Feldbus (4),
wobei der Busmaster (2) und die Signaleinheit (6, 32) über den Feldbus (4) miteinander verbunden sind,
wobei die erste Steuereinheit (8) und die Signaleinheit (6, 32) sicherheitsbezogene Einrichtungen (46, 48) aufweisen, um eine fehlersichere Kommunikation miteinander zu gewährleisten und
wobei der Feldbus (4) einen umlaufenden Telegrammverkehr (106, 132, 134) zwischen einzelnen an den Feldbus (4) angeschlossenen Einheiten (2, 6, 32, 34) bereitstellt,
**dadurch gekennzeichnet, dass**
die erste Steuereinheit (8) nicht direkt an den Feldbus (4) angeschlossen ist, sondern fehlersichere Daten (106, 132, 134) von der ersten Steuereinheit (8) über eine Multiport-Memory-Schnittstelle (12, 14) an den Busmaster übermittelt werden und dadurch, dass
die Kommunikation über den Feldbus (4) rahmenbasiert ist, wobei der Busmaster (2) die fehlersicheren Daten in den Feldbusrahmen (50) einfügt, um die Daten an die Signaleinheit (6, 32, 34) zu übermitteln.

33. Steuereinheit (1), hergerichtet zur Verwendung als die erste Steuereinheit (8) in dem Steuerungssystem (1) nach einem der vorstehenden Ansprüche.

34. Baugruppe (16), hergerichtet zur Verwendung in dem Steuerungssystem (1) nach einem der vorstehenden Ansprüche umfassend den Busmaster (2) und die erste Steuerungseinheit (8).
